# EUROPÄISCHE PATENTSCHRIFT

(11) **EP 2 384 287 B1**
(45) Veröffentlichungstag und Bekanntmachung des Hinweises auf die Patenterteilung: **25.05.2016**
(21) Anmeldenummer: 09801664.5
(22) Anmeldetag: 17.12.2009
(51) Int. Cl.: B60L 11/18, H02J 7/00

(54) **SPEICHERMEDIUM MIT DATENSPEICHER UND LADESTATION**
STORING MEDIUM WITH DATA STORE AND CHARGE STATION
SUPPORT DE STOCKAGE AVEC ENREGISTREUR DE DONNÉES ET STATION DE CHARGE

(30) Priorität: 31.12.2008 DE 102008063438
(43) Veröffentlichungstag der Anmeldung: 09.11.2011
(73) Patentinhaber: Deutsche Post AG, 53113 Bonn (DE)
(72) Erfinder: BERCOVICI, Adrian, 53111 Bonn (DE)
(74) Vertreter: Jostarndt, Hans-Dieter
(86) Internationale Anmeldenummer: PCT/EP2009/009057
(87) Internationale Veröffentlichungsnummer: WO 2010/075977

(56) Entgegenhaltungen:
- EP-A1- 0 583 906
- EP-A1- 1 995 109
- DE-A1- 3 902 339
- GB-A- 2 438 979
- US-B1- 6 941 197

## Beschreibung

Die Erfindung betrifft ein Speichermedium und ein Verfahren zu seinem Betreiben.

Für die Energieversorgung von Fahrzeugen ist eine Vielzahl von Energieträgern bekannt.

Für elektrische angetriebene Transportfahrzeuge ist aus der europäischen Patentanmeldung EP 0 476 405 A1 ein automatisches Ladungsüberwachungs- und Batteriewechselsystem bekannt.

Die dort dargestellte Ladestation enthält eine Batteriewechselstation mit Ladeeinrichtungen für mehrere Batterien. Hierbei weist jede der Batterien einen sie identifizierenden Identifizierungscode auf. Ferner sind am Transportfahrzeug und in der Wechselstation je eine Leseeinrichtung zur Identifizierung der Batterien angeordnet.

Der Erfindung liegt die Aufgabe zugrunde, ein Speichermedium bereitzustellen, das es ermöglicht, eine Vielzahl von Fahrzeugen möglichst flexibel und zuverlässig mit Speichermedien zu versehen, die einen für gewünschte Fahrzeugbetriebszustände gewünschten Speicherzustand aufweisen.

Insbesondere ist es erfindungsgemäß wünschenswert, ein schnelles und zuverlässiges Versehen von Fahrzeugen mit möglichst vollständig geladenen Speichermedien zu ermöglichen.

Erfindungsgemäß wird diese Aufgabe durch ein Speichermedium nach Anspruch 1 und eine Ladestation nach Anspruch 6 gelöst, wobei das Speichermedium eine SIM-Karte enthält.

Weiterbildungen der Erfindung sind Gegenstand der Ansprüche 2 bis 5 und 7 - 11.

Die Erfindung betrifft ferner ein Speichermedium, insbesondere zum Einsatz als Energieträger für Fahrzeuge, dass das Speichermedium einen Datenspeicher enthält, der Informationen über Ladezustände des Speichermediums speichert.

Eine Weiterbildung des Speichermediums zeichnet sich dadurch aus, dass der Datenspeicher Informationen über wenigstens einen Einsatzort speichern kann.

Eine Ausführungsform des Speichermediums sieht vor, dass es mit einem Mittel zur drahtlosen Datenübertragung verbunden ist.

Eine Weiterbildung des Speichermediums zeichnet sich dadurch aus, dass das Mittel zur drahtlosen Datenübertragung ein Transponder ist.

Eine Ausführungsform des Speichermediums beinhaltet, dass es eine Autorisierungseinrichtung enthält, wobei die Autorisierungseinrichtung so gestaltet ist, dass die Übertragung von Informationen zu dem Datenspeicher nur durch eine autorisierte Datensendeeinrichtung erfolgen kann.

Die Erfindung beinhaltet eine Ladestation mit Mitteln zum Steuern von Lade- und/oder Entladevorgängen sowie zum Steuern eines Austausches von wenigstens einem ersten Speichermedium gegen ein zweites Speichermedium. Erfindungsgemäß ist vorgesehen, dass die Ladestation ein Mittel zur Zuordnung des ersten Speichermediums zu einem Fahrzeug und/oder einem Halter des Fahrzeugs aufweist.

Eine Weiterbildung der Erfindung zeichnet sich dadurch aus, dass das Mittel zur Zuordnung des ersten Speichermediums ein Mittel zur Identifikation des Fahrzeugs und/oder eines Halters des Fahrzeugs aufweist.

Eine weitere Ausführungsform der Erfindung sieht vor, dass sie ein Mittel zur Entnahme des ersten Speichermediums aus dem Fahrzeug aufweist.

Eine Weiterbildung der Erfindung sieht vor, dass die Ladestation ein Mittel zum Beladen des Fahrzeugs mit dem weiteren Speichermedium enthält.

Eine Weiterbildung der Erfindung sieht vor, dass die Ladestation einen Datenspeicher zum Speichern von Informationen über Ladezustände von Speichermedien enthält.

Der Begriff des Speichermediums ist in einem weiten Sinne zu verstehen. Er umfasst insbesondere einen Träger elektrischer Energie, beispielsweise eine Batterie. Es ist jedoch ferner möglich, dass es sich hierbei um einen anderen Energieträger, beispielsweise einen Kraftfahrzeugtreibstoff, handelt.

Auch der Begriff des Entladens ist in einem weiten Sinne zu verstehen. Er umfasst sowohl das Entladen einer als Speichermedium dienenden Batterie als auch die Entnahme eines Energieträgers aus einem Vorratsbehälter, beispielsweise einem Tank.

## Patentansprüche

1. Speichermedium, zum Einsatz als Energieträger für Fahrzeuge, wobei das Speichermedium einen Datenspeicher enthält, der Informationen über Ladezustände des Speichermediums speichert,
**dadurch gekennzeichnet,**
**dass** das Speichermedium eine SIM-Karte enthält.

2. Speichermedium nach Anspruch 1,
**dadurch gekennzeichnet,**
**dass** der Datenspeicher Informationen über wenigstens einen Einsatzort speichern kann.

3. Speichermedium nach einem der vorangegangenen Ansprüche,
**dadurch gekennzeichnet,**
**dass** es mit einem Mittel zur drahtlosen Datenübertragung verbunden ist.

4. Speichermedium nach Anspruch 3,
**dadurch gekennzeichnet,**
**dass** das Mittel zur drahtlosen Datenübertragung ein Transponder ist.

5. Speichermedium nach einem der vorangegangenen Ansprüche,
**dadurch gekennzeichnet,**
**dass** es eine Autorisierungseinrichtung enthält, wobei die Autorisierungseinrichtung so gestaltet ist, dass die Übertragung von Informationen zu dem Datenspeicher nur durch eine autorisierte Datensendeeinrichtung erfolgen kann.

6. Ladestation mit Mitteln zum Steuern von Lade- und/oder Entladevorgängen,
**dadurch gekennzeichnet,**
**dass** die Ladestation ein Mittel zu einer Identifikation von Speichermedien nach Anspruch 1 enthält.

7. Ladestation nach Anspruch 6,
**dadurch gekennzeichnet,**
**dass** die Ladestation so ausgestattet ist, dass sie ein Mittel zum Auslesen eines Datenspeichers des Speichermediums aufweist.

8. Ladestation nach Anspruch 7,
**dadurch gekennzeichnet,**
**dass** die Ladestation einen Datenspeicher zum Speichern von Information über die Ladezustände der Speichermedien enthält.

9. Ladestation nach einem der Ansprüche 6 bis 8,
**dadurch gekennzeichnet,**
**dass** die Ladestation Mittel zur Entnahme des Speichermediums als ein erstes der Speichermedien aus dem Fahrzeug sowie Mittel zum Beladen des Fahtrzeugs mit einem weiteren der Speichermedien aufweist.

10. Ladestation nach Anspruch 9,
**dadurch gekennzeichnet,**
**dass** die Ladestation mit Mitteln zum Steuern von Lade und/oder Entladevorgängen sowie zum Steuern eines Austausches von wenigstens des ersten Speichermediuns gegen ein zweites der Speichermedien umfasst, wobei die Ladestation ein Mittel zur Zuordnung des ersten Speichermediums zu einem Fahrzeug und/oder Halter des Fahrzeugs aufweist.

11. Ladestation nach Anspruch 10,
**dadurch gekennzeichnet,**
**dass** die Ladestation ein Mittel zur Überprüfung eines Ladezustands des ersten Speichermediums und einen Datenspeicher zum Speichern von Informationen über Ladezustände von den Speichermedien enthält, wobei ein Entladen und/oder ein Beladen von wenigstens einem der Speichermedien so erfolgt, dass ein Ladezustand dieses Speichermediums unterhalb eines vorgebbaren unteren Sollwert liegt.

## Claims

1. A storage medium for use an as energy carrier for vehicles, whereby the storage medium comprises a data storage that stores information about the charge states of the storage medium,
**characterized in that**
the storage medium contains a SIM card.

2. The storage medium according to claim 1,
**characterized in that**
the data storage can store information about at least one place of use.

3. The storage medium according to one of the preceding claims,
**characterized in that**
it is connected to a means for wireless data transmission.

4. The storage medium according to claim 3,
**characterized in that**
the means for wireless data transmission is a transponder.

5. The storage medium according to one of the preceding claims,
**characterized in that**
it comprises an authorization unit, whereby the authorization unit is configured in such a way that the transmission of information to the data storage can only be carried out by an authorized data transmission device.

6. A charge station to control the charging and/or discharging processes,
**characterized in that**
the charge station comprises a means for the identification of storage media according to claim 1.

7. The charge station according to claim 6,
**characterized in that**
the charge station is configured in such a way that it has a means to read out a data storage of the storage medium.

8. The charge station according to claim 7,
**characterized in that**
the charge station comprises a data storage to store information about the charge states of the storage media.

9. The charge station according to one of claims 6 to 8,
**characterized in that**
the charge station has means to remove the storage medium as a first of the storage media from the vehicle as well as means to charge the vehicle with another one of the storage media.

10. The charge station according to claim 9,
**characterized in that**
the charge station has means to control the charging and/or discharging processes as well as to control the replacement of at least the first storage medium for a second of the storage media, whereby the charge station has a means to associate the first storage medium with a vehicle and/or with the owner of the vehicle.

11. The charge station according to claim 10,
**characterized in that**
the charge station has a means to check the charge state of the first storage medium and a data storage to store information about charge states of the storage media, whereby the charging and/or discharging of at least one of the storage media is carried out in such a way that the charge state of this storage medium lies below a predefinable lower target value.

## Revendications

1. Support de stockage destiné à être utilisé en tant que source d'énergie pour des véhicules, le support de stockage contenant une mémoire de données qui stocke des informations sur des états de charge du support de stockage, **caractérisé en ce que** le support de stockage contient une carte SIM.

2. Support de stockage selon la revendication 1, **caractérisé en ce que** la mémoire de données peut stocker des informations sur au moins un lieu d'utilisation.

3. Support de stockage selon l'une des revendications précédentes, **caractérisé en ce qu'**il est relié à un moyen de transmission de données sans fil.

4. Support de stockage selon la revendication 3, **caractérisé en ce que** le moyen de transmission de données sans fil est un transpondeur.

5. Support de stockage selon l'une des revendications précédentes, **caractérisé en ce qu'**il contient un dispositif d'autorisation, le dispositif d'autorisation étant conçu de telle sorte que la transmission d'informations à la mémoire de données ne peut être effectuée que par un dispositif d'émission de données autorisé.

6. Station de chargement comportant des moyens pour commander des opérations de chargement et/ou de déchargement, **caractérisée en ce que** la station de chargement comporte un moyen d'identification de supports de stockage selon la revendication 1.

7. Station de chargement selon la revendication 6, **caractérisée en ce que** la station de chargement est équipée de telle sorte qu'elle comporte un moyen de lecture d'une mémoire de données du support de stockage.

8. Station de chargement selon la revendication 7, **caractérisée en ce que** la station de chargement contient une mémoire de données pour le stockage d'informations sur les états de charge des supports de stockage.

9. Station de chargement selon l'une des revendications 6 à 8, **caractérisée en ce que** la station de chargement comporte des moyens permettant de retirer du véhicule le support de stockage en tant que premier des supports de stockage et des moyens pour placer un autre des supports de stockage dans le véhicule.

10. Station de chargement selon la revendication 9, **caractérisée en ce que** la station de chargement comprend des moyens pour commander des opérations de chargement et/ou de déchargement ainsi que pour commander un remplacement au moins du premier support de stockage par un deuxième des supports de stockage, la station de chargement comportant un moyen pour associer le premier support de stockage à un véhicule et/ou détenteur du véhicule.

11. Station de chargement selon la revendication 10, **caractérisée en ce que** la station de chargement contient un moyen pour vérifier un état de charge du premier support de stockage et une mémoire de données pour stocker des informations sur des états de charge des supports de stockage, un déchargement et/ou un chargement d'au moins l'un des supports de stockage s'effectuant de telle sorte qu'un état de charge de ce support de stockage se situe en dessous d'une valeur de consigne inférieure prédéterminable.
